# EUROPÄISCHE PATENTSCHRIFT

(11) **EP 2 178 322 B1**
(45) Veröffentlichungstag und Bekanntmachung des Hinweises auf die Patenterteilung: **23.11.2011**
(21) Anmeldenummer: 10000377.1
(22) Anmeldetag: 08.10.2004
(51) Int. Cl.: H04W 8/18

(54) **Verfahren zur Ansteuerung einer Mehrgerätekonfiguration von Telekommunikationsendgeräten**
Method for controlling a multi-device configuration of telecommunications devices
Procédé pour controller une configuration multi-dispositifs de dispositifs de télécommunication

(30) Priorität: 09.10.2003 DE 10347617
(43) Veröffentlichungstag der Anmeldung: 21.04.2010
(62) Teilanmeldung aus: 04790190.5
(73) Patentinhaber: T-Mobile Deutschland GmbH, 53227 Bonn (DE)
(72) Erfinder: Dennert, Thomas, 53844 Troisdorf (DE); Quast, Joachim, 53604 Bad Honnef (DE); Spörl, Michael, 53255 Bonn (DE); Vöhringer, Gerrit, 53111 Bonn (DE); Wegmann, Georg, 53111 Bonn (DE)
(74) Vertreter: Riebling, Peter

(56) Entgegenhaltungen:
- EP-A- 0 711 090
- US-A- 5 708 809
- US-A1- 2002 028 678
- US-B1- 6 366 777

## Beschreibung

Die Erfindung betrifft ein Verfahren zur Ansteuerung einer zwei oder mehrere Endgerate umfassenden Mehrgerätekonfiguration von Telekommunikationsendgeräten in einem öffentlichen Telekommunikationsnetz.

### Hintergrund und Problemstellung

In Mobilfunknetzen werden heute verschiedene Verfahren bereitgestellt, um einem Teilnehmer die Nutzung mehrerer Endgeräte zu erlauben (so genannte Twin-Card, Multi-Card Produkte). Dieses Produktszenario ergibt sich z.B. aus der parallelen Nutzung von z.B. mobilem Endgerät, Autotelefon und Organiser. Hierbei ist jeweils ein oder sogar gleichzeitig mehrere Endgeräte für gehende oder kommende Verbindungen unter einer einheitlichen Nummer aktiviert. Bei Ansätzen mit mehreren gleichzeitig aktiven Endgeräten werden die unter einer einheitlichen Nummer erfolgenden ankommende Verbindungswünsche parallel zu mehreren Endgeräten des Teilnehmers signalisiert.

Nachteile existierender Verfahren für eine solche parallele Rufübermittlung resultieren aus der Unsicherheit über den Zustand der Endgeräte (ausgeschaltet, funktechnisch nicht erreichbar, besetzt). Hieraus ergibt sich:
- unnötige Belegung von Funk- und Festnetzressourcen für eigentlich unnötige Verbindungsversuche
- Netzdienste wie Rufumleitung werden im Netzbereich der jeweiligen gerufenen Endgeräte ausgeführt, dies führt zu teilweise unerwünschten Produktszenarien, sowie vor allem zu unnötigen Belegungen von Netzressourcen als auch zu erheblichen Zusatzkosten für Netzbetreiber und Endkunden.
• Netzdienste, wie Rufumleitung, hängen von den für die verschiedenen Endgeräte im Netz jeweils separat zugeordneten Datensätzen ab. Da diese nicht automatisch synchronisiert werden, ergibt sich ein unterschiedliches Anrufverhalten je nach aktuell genutzten Endgeräten und/oder ein erheblicher Aufwand des Nutzers, um die Endgerätedaten manuell zu synchronisieren. Weiterhin müssen die Wahlmöglichkeiten des Nutzers für die Einstellungen von Netzdiensten eingeschränkt werden, um ein korrektes Netzverhalten bei der Zustellung paralleler Anrufe zu gewährleisten.

Die EP 0 711 090 A2 offenbart ein Verfahren zur Ansteuerung einer Anordnung von zwei oder mehrere Endgeräte umfassenden Konfiguration (Mehrgerätekonfiguration) von Telekommunikationsendgeräten in einem öffentlichen Telekommunikationsnetz. Eine Vielzahl von Teilnehmeridentifikationschips teilen sich eine einzige Teilnehmeridentifikation.

US 5 708 809 A beschreibt ein Verfahren zur Aktualisierung der Programmstruktur einer modularen Kommunikationsanlage, die aus mehreren über einen Bus miteinander verbundenen Baugruppen besteht. Bei einer Inbetriebnahme oder beim Ändern der Konfiguration wird eine Aktualisierung der Programmstruktur in jeder Baugruppe selbsttätig durchgeführt.

Die EP 0 740 482 A1 betrifft ein Telefonmanagementsystem in Form eines beim Teilnehmer eingerichteten eigenständigen Prozessors, der den Anschluss einer Vielzahl von Teilnehmerendgeräten, wie Mobiltelefon, Schnurlostelefon, Anrufbeantworter, etc., ermöglicht. Bei einem eingehenden Anruf leitet der Prozessor diesen an das jeweils "aktive" Endgerät weiter.

WO 01 01708 A1 offenbart ein automatisches Anrufverteilersystem ähnlich wie EP 0 740 482 A1 mit dem Unterschied, dass hier die Verteilung von Anrufen auf die angeschlossenen Endgeräte von einem Netzelement des Kommunikationsnetzes durchgeführt wird.

Aufgabe der vorliegenden Erfindung ist es, ein Verfahren vorzuschlagen, welches eine Netzressourcen einsparende Ansteuerung von Endgeräten in einer Mehrgeratekonfiguration erlaubt.

Gelöst wird diese Aufgabe durch ein Verfahren mit den Merkmalen des Patentanspruchs 1.

### Vorteile des Verfahrens

- Optimierte Nutzung von Netzressourcen für den Aufbau von Telekommunikationsverbindungen insbesondere im Fall von Rufumleitungen und parallelen Anrufversuchen auf mehrere einer Rufnummer zugeordnete Endgeräte. • einfache Synchronisation von Leistungsmerkmalen eines Teilnehmers eines öffentlichen Mobilfunknetzes, die er für mehrere ihm zugeordnete Endgeräte einmalig einstellen bzw. abfragen möchte.

### Geltungsbereich

Der Grundgedanke der Erfindung bezieht sich auf Telekommunikationsnetze allgemein. Aus derzeitiger Sicht ist eine mögliche Anwendung für öffentliche Mobilkommunikationsnetze (z. B. nach dem GSM Standard) interessant, jedoch nicht darauf beschränkt.

Soweit in diesem Dokument von Endgeräten in Zusammenhang mit Mobiltelekommunikation die Rede ist, ist unter dem Begriff Endgerät neben dem Gerät selbst auch die Kombination von Endgerät und angeschlossenem Identifikations-Chip (z.B. GSM SIM , UMTS USIM etc.) in allen Abwandlungen, wie sie jetzigen und zukünftigen Mobilfunknetzen vorkommen können, zu verstehen.

### Technische Basis des Verfahrens

Das Verfahren nutzt Technologie und Vermittlungsprotokolle gemäß internationaler Telekommunikationsstandards, insbesondere wie z.B. GSM/UMTS, hierbei insbesondere gemäß der GSM CAMEL und MAP Standards. Die Dienstlogik des Verfahrens basiert auf einem zentralen Dienstknoten und einer Dienstdatenbank die mit den Vermittlungen und Mobilitäts-/Profil-Datenbanken der Teilnehmer des mobilen Telekommunikationsnetzes kommuniziert und diese steuert. Eine typische Umsetzung einer solchen Basis bildet die IN (Intelligent Network) Technologie gemäß CCITT Q12XX Serie (siehe auch ETSI CORE INAP Protokoll gemäß ETS 300 374, ETSI GSM CAMEL Protokoll 03.78) im Zusammenspiel mit GSM MSC und GSM HLR.

### Beschreibung des Verfahrens

Die Erfindungsidee wird im Folgenden anhand eines Beispiels näher erläutert ohne Einschränkung der universellen Anwendbarkeit. Hierbei zeigen:
- Figur 1:: eine schematische Darstellung der am erfindungsgemäßen Verfahren beteiligten Netzelemente und Einrichtungen;
- Figur 2:: Schematischer Ablauf einer Synchronisation der Teilnehmer-Mobilitäts-/Profildatenbanken.

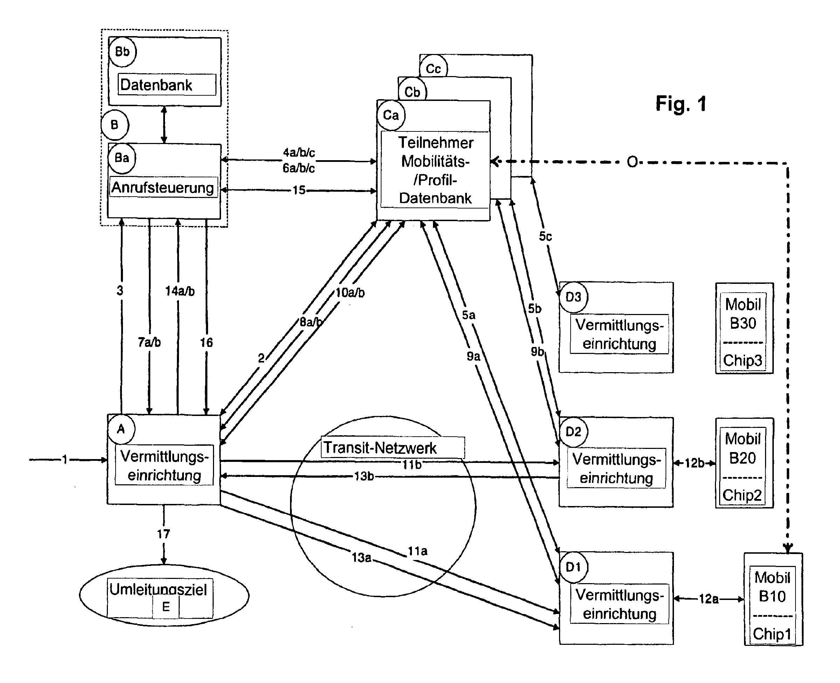

Beschreibung der in Fig. 1 genutzten Netzelemente:
Die einzelnen Blöcke repräsentieren die folgenden Einrichtungen:
   A) : Vermittlungseinrichtung des öffentlichen Netzes (z.B. GSM MSC: Mobile Switching Center)
   Ba/b) : intelligente Anrufsteuerung des öffentlichen Netzes mit integrierter oder abgesetzter Datenbank zur Steuerung der Logik und Teilnehmerdaten (z.B. IN SCP/SMP, Service Control Point/Service Management Point)
   Ca/b/c) : Mobilitäts-/Profil-Datenbanken des öffentlichen Netzes mit Aufenthaltsinformationen und Leistungsmerkmalprofilen der Mobilfunkteilnehmer
   B10/B20/B30 (z.B. GSM HLR, Home Location Register, Heimatregister)
   D1/D2/D3) : Vermittlungseinrichtung des öffentlichen Netzes (z.B. GSM MSC)
   B10/B20/B30) : mobile Endgeräte
   E : Umleitungsziel

Mehreren mobilen Endgeräten B10, B20, B30 (Haupt- und Nebengeräte) eines Teilnehmers sei in der Datenbank Bb eines zentralen Ruf-Steuerungssystems B eine gemeinsame Rufnummer zugewiesen. Jedes Endgerät wird in bekannter Weise mit einem Identifikations-Chip, auch bezeichnet als Teilnehmeridentifikationsmodul, SIM-Karte, GSM SIM, UMTS USIM, betrieben. Auf dem Identifikations-Chip sind unter anderem Teilnehmerdaten gespeichert, die für den Zugang und die Nutzung von Diensten des Mobilfunknetzes notwendig sind.

Der Teilnehmer administriert zunächst für ein Hauptgerät B10 die Leistungsmerkmale wie z.B. Rufumleitung. Die entsprechenden Einstellungen für die Nebengeräte B20, B30 sind nicht gesetzt und können vom Teilnehmer nicht verändert werden. Eine entsprechende Einstellung für die Nebengeräte ist auch, wie im Folgenden aufgezeigt wird, nicht notwendig.

Erhält die Netzvermittlung A einen Anruf für den Teilnehmer unter der für alle seine Endgeräte einheitlichen Rufnummer, so initiiert diese eine Abfrage der Teilnehmerdatenbank Ca, welche wiederum aufgrund der entsprechend eingestellten Teilnehmerdaten eine Abfrage des zentralen Ruf-Steuerungssystems B initiiert. Dieses enthält in einer zugeordneten Datenbank die Information über die der Rufnummer zugeordneten Geräte B10, B20, B30. Für diese Geräte ermittelt das Ruf-Steuerungssystem B nun in den Mobilitäts-/Profil-Datenbanken Ca, Cb, Cc der zu rufenden Teilnehmer den Status der zugeordneten Endgeräte. Weiterhin wird hierbei auch der Status der zu rufenden Teilnehmer in den aktuellen Aufenthaltsvermittlungen D1, D2, D3 abgefragt. Basierend auf diesen Informationen wird anhand eines entsprechenden Regelwerkes im Ruf-Steuerungssystem B nun ermittelt, ob es sinnvoll ist, die Endgeräte im Netz anzurufen, oder der ankommende Anruf unmittelbar umgeleitet bzw. ausgelöst werden soll. Falls entsprechend den im RufSteuerungssystem hinterlegten Regeln die Endgeräte gerufen werden sollen, so fordert das Ruf-Steuerungssystem B die Netzvermittlung A zum Fortsetzen des Rufaufbau auf, wobei hierbei parallele Anrufversuche zu mehreren der Endgeräte B10, B20, B30 erfolgen können. Gleichzeitig wird hierbei die Netzvermittlung A vom Ruf-Steuerungssystem angewiesen, das erfolglose Ende dieser Rufaufbauversuche wieder an das Ruf-Steuerungssystem Ba zurück zu melden. Üblicherweise werden eingehende Rufe in der Aufenthaltsvermittlung D1, D2, D3 des Teilnehmers bei Erreichen bestimmter Bedingungen (nicht erreichbar, keine Rufannahme innerhalb Rufintervall), aufgrund des Teilnehmerprofils in der Mobilitäts-/Profil-Datenbank Ca, Cb, Cc des gerufenen Teilnehmers, umgeleitet. Zur Vermeidung dieses unerwünschten Effektes wird die Aufenthaltsvermittlung D1, D2, D3 des Teilnehmers vom Ruf-Steuerungssystem über eine geeignete Signalisierung aufgefordert, Rufumleitungen zu unterdrücken. Falls im weiteren Verlauf tatsächlich keine Verbindung zustande kommt, da die gerufenen Endgeräte nicht erreichbar sind bzw. der Teilnehmer den Ruf nicht annimmt, so erfolgt eine Rückmeldung an das Rufsteuerungssystem B. Anhand dieser Information und einer Abfrage des Teilnehmerprofils des Haupt-Endgerätes B10, welches für alle Endgeräte genutzt wird, ermittelt die Rufsteuerung Ba die für den weiteren Ablauf gewünschte Reaktion. Dies kann das Auslösen der Verbindung oder aber eine Umleitung zu einem neuen Ziel E sein. Die Ruf-Steuerung veranlasst die Vermittlung nun zu den entsprechenden Funktionen und beendet die Steuerung.

Das nachfolgende Beispiel verdeutlicht diesen Ablauf anhand einer Beschreibung des in Fig. 1 dargestellten Ablaufes der einzelnen Ablaufschritte 0 bis 17:
0) Einstellung des Teilnehmerprofils (insbesondere gewünschtes Rufumleitungsverhalten) durch den Teilnehmer am Endgerät B10 in der zugeordneten Profil-Datenbank Ca zu einem beliebigen Zeitpunkt vor dem nachfolgend beschriebenen Ablauf.
1) ein ankommender Anruf auf die einheitliche Nummer des Teilnehmers geht bei einer Vermittlung A ein
2) Ermittlung des Teilnehmeraufenthalts, z.B. im Bereich der Vermittlung D1, und Teilnehmerprofils in der Mobilitäts-/Profil-Datenbank Ca durch die Vermittlung A
3) Abfrage der Anrufsteuerung Ba durch die Vermittlung A, ausgelöst durch das abgefragte Teilnehmerprofil
4a/b/c) Anfrage des Zustands der gerufenen Endgeräte in den Mobilitäts-/Profil-Datenbanken Ca, Cb, Cc durch die Anrufsteuerung B
5a/b/c) Anfrage/Übermittlung des Zustands der gerufenen Endgeräte B10,B20,B30 in den Vermittlungen D1, D2, D3 in deren Bereich sich die Endgeräte aufhalten
6a/b/c) Übermittlung des Zustands der gerufenen Endgeräte B10 B20, B30 an die Anrufsteuerung Ba.
   Danach erfolgt gemäß des Rufsteuerungsalgorithmus im
   Rufsteuerungssystem B die Ermittlung der weiteren Schritte (s. Tabelle 1). Im vorliegenden Beispiel wurde das Endgerät B30 von der Aufenthaltsvermittlung D3 als nicht erreichbar gemeldet. Ein Anrufversuch mit entsprechender Nutzung von Leitungsressourcen kann somit entfallen. Die Endgeräte B10, B20 wurden als frei gemeldet.
7a/b Initiierung der Anrufversuche zu den "freien" Endgeräten B10/B20 des Teilnehmers
8a/b) Abfrage benötigter Informationen zum Rufaufbau von den Teilnehmer-Mobilitäts-/Profildatenbanken Ca, Cb
9a/b) Abfrage/Übermittlung benötigter Informationen zum Rufaufbau in den für die Endgeräte B10, B20 zuständigen Teilnehmervermittlungen D1,D2
10a/b) Übermittlung benötigter Informationen zum Rufaufbau zwischen Vermittlungseinrichtung A und Mobilitäts-/Profildatenbanken Ca, Cb
11a/b) Rufzustellung mit Belegung Festnetz-/Funknetz-Ressourcen, z.B. über ein Transit-Netzwerk und das Funknetz
12a/b) nicht erfolgreicher Rufaufbau zu den Endgeräten B10/B20 (z.B. wegen funktechnisch nicht erreichbar, Teilnehmer nimmt nicht an, Teilnehmer lehnt Ruf ab)
13a/b) Übermittlung einer Nachricht über nicht erfolgreichen Rufaufbau an die Vermittlung A, Freigabe der Netzressourcen
14a/b) Übermittlung nicht erfolgreicher Rufaufbau von der Vermittlung A an die intelligente Anrufsteuerung B
15) Ermittlung der für diesen Fall vorgesehenen Einstellungen, z.B. Rufumleitung, in der Profil-Datenbank Ca des Haupt-Teilnehmers B10 und Ableitung des weiteren Verhaltens durch das Rufsteuerungssystem B.
16) Initiieren einer Rufumleitung
17) direkter Rufaufbau durch die Netzvermittlung zum Umleitungsziel E

Eine für solche Rufumleitungen sonst übliche
Verbindungsführung mit entsprechenden Leitungsbelegungen von der ursprünglichen Vermittlung A zur Aufenthaltsvermittlung D1, D2 des Teilnehmers und weiter zum finalen Umleitungsziel E wurde somit vermieden.

Nachfolgende **Tabelle 1** bietet ein Beispiel für die Ermittlung eines geeigneten Verhaltens der intelligenten Ruf-Steuerung Ba im Netzelement B (siehe Schritt 6 oben): Anhand des für die Endgeräte B1O/B2O/B30 ermittelten Status (hier: Tabelle 1, Zeile 3: Idle, Idle, NRc) (Schritte 4 bis 6) wird hierbei über den weiteren Ablauf der Verbindungssteuerung entschieden.

| Nb | B10 1) | B20 1) | B30 1) | Reaktion nach Ablauf der Statusabfrage | Anm. |
|---|---|---|---|---|---|
| 1 | Idle | Idle | Idle | Ruf B10/B20/B30 | 2) |
| 2 | Idle | Idle | Busy | Rufumleitung gemäß Teilnehmerprofil | |
| **3** | **Idle** | **Idle** | **NRc** | **Ruf B10/B20** | **2)** |
| 4 | Idle | Idle | NP | Ruf B10/B20/B30 | 2) |
| 5 | Idle | Busy | Idle | s. Zeile 2 | |
| 6 | Idle | Busy | Busy | s. 2 | |
| 7 | Idle | Busy | NRc | s. 2 | |
| 8 | Idle | Busy | NP | s. 2 | |
| 9 | Idle | NRc | Idle | Ruf B10/B30 | 2) |
| 10 | Idle | NRc | Busy | s.2 | |
| 11 | Idle | NRc | NRc | Ruf B10 | 2) |
| 12 | Idle | NRc | NP | Ruf B10/B30 | 2) |
| 13 | Idle | NP | Idle | Ruf B10/B20/B30 | 2) |
| 14 | Idle | NP | Busy | s.2 | |
| 15 | Idle | NP | NRc | Ruf B10/B20 | 2) |
| 16 | Idle | NP | NP | Ruf B10/B20/B30 | 2) |
| 17 | Busy | Idle | Idle | s.2 | |
| 18 | Busy | Idle | Busy | s. 2 | |
| 19 | Busy | Idle | NRc | s. 2 | |
| 20 | Busy | Idle | NP | s. 2 | |
| 21 | Busy | Busy | Idle | s. 2 | |
| 22 | Busy | Busy | Busy | s. 2 | |
| 23 | Busy | Busy | NRc | s. 2 | |
| 24 | Busy | Busy | NP | s. 2 | |
| 25 | Busy | NRc | Idle | s. 2 | |
| 26 | Busy | NRc | Busy | s. 2 | |
| 27 | Busy | NRc | NRc | s. 2 | |
| 28 | Busy | NRc | NP | s. 2 | |
| 29 | Busy | NP | Idle | s. 2 | |
| 30 | Busy | NP | Busy | s.2 | |
| 31 | Busy | NP | NRc | s. 2 | |
| 32 | Busy | NP | NP | s.2 | |
| 33 | NRc | Idle | Idle | Ruf B20/B30 | 2) |
| 34 | NRc | Idle | Busy | s. 2 | |
| 35 | NRc | Idle | NRc | Ruf B20 | 2) |
| 36 | NRc | Idle | NP | Ruf B20, B30 | 2) |
| 37 | NRc | Busy | Idle | s. 2 | |
| 38 | NRc | Busy | Busy | s. 2 | |
| 39 | NRc | Busy | NRc | s. 2 | |
| 40 | NRc | Busy | NP | s. 2 | |
| 41 | NRc | NRc | Idle | Ruf B30 | 2) |
| 42 | NRc | NRc | Busy | s. 2 | |
| 43 | NRc | NRc | NRc | s. 2 | |
| 44 | NRc | NRc | NP | Ruf B30 | 2) |
| 45 | NRc | NP | Idle | Ruf B20/B30 | 2) |
| 46 | NRc | NP | Busy | s. 2 | |
| 47 | NRc | NP | NRc | Ruf B20 | 2) |
| 48 | NRc | NP | NP | Ruf B20/B30 | 2) |
| 49 | NP | Idle | Idle | Ruf B10/B20/B30 | 2) |
| 50 | NP | Idle | Busy | s. 2 | |
| 51 | NP | Idle | NRc | Ruf B10/B20 | 2) |
| 52 | NP | Idle | NP | Ruf B10/B20/B30 | 2) |
| 53 | NP | Busy | Idle | s. 2 | |
| 54 | NP | Busy | Busy | s. 2 | |
| 55 | NP | Busy | NRc | s. 2 | |
| 56 | NP | Busy | NP | s. 2 | |
| 57 | NP | NRc | Idle | Ruf B10/B30 | 2) |
| 58 | NP | NRc | Busy | s. 2 | |
| 59 | NP | NRc | NRc | Ruf B10 | 2) |
| 60 | NP | NRc | NP | Ruf B10/B30 | 2) |
| 61 | NP | NP | Idle | Ruf B10/B20/B30 | 2) |
| 62 | NP | NP | Busy | s.2 | |
| 63 | NP | NP | NRc | Ruf B10/B20 | 2) |
| 64 | NP | NP | NP | Ruf B10/B20/B30 | 2) |

| | | | | | |
|---|---|---|---|---|---|
| **Tabelle 1** | | | | | |

Erläuterung zu den Anmerkungen in der Tabelle:
1) Teilnehmerstatus:
   - Busy:
      besetzt
   - NRc (not reachable) nicht erreichbar
   - Idle:
      frei
   - NP (not provided):
      kein Status verfügbar
2) Verbindungsaufbau zu den ermittelten Endgeräten wird initiiert

Eine weitere Verbesserung des Ablaufes ergibt sich, wenn die Rufsteuerung B nicht nur die Profildaten der Mobilitäts-/Profil-Datenbank Ca einer Masterchipkarte (ist die SIM-Karte des Haupt-Endgerätes) für die Steuerung nutzt, sondern diese Daten auch mit den Mobilitäts-/Profil-Datenbanken Cb, Cc der anderen SIM-Karten synchronisiert werden. Hierdurch ergibt sich für den Teilnehmer der Vorteil, dass er mit einem beliebigen seiner Endgeräte B10, B20, B30 den Status der jeweils diesem zugeordneten Mobilitäts-/Profil-Datenbank Ca, Cb, Cc abfragen kann und immer die selbe Information über den Zustand seiner Leistungsmerkmale (z.B. Rufumleitung) erhält.

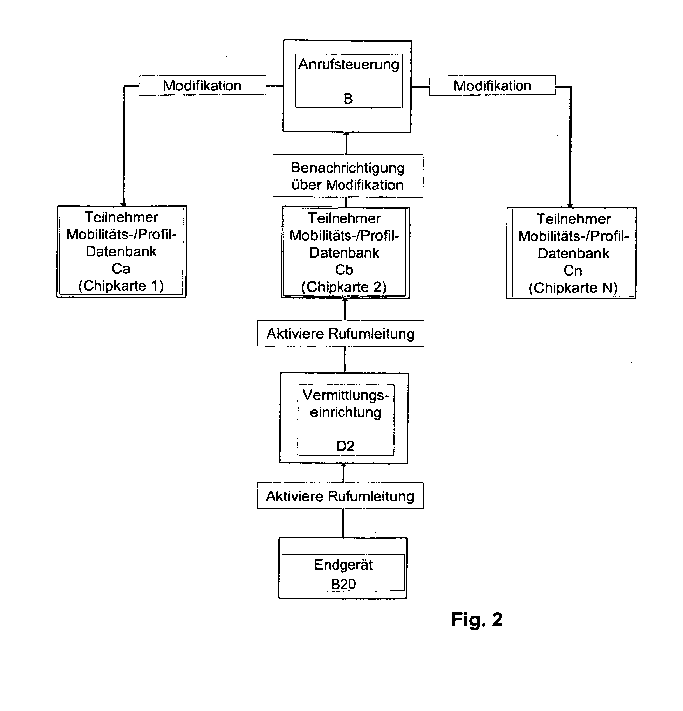

Figur 2 zeigt eine beispielhafte Realisierung dieser Synchronisation.

Der Teilnehmer aktiviert an einem seiner Endgeräte, z.B. Endgerät B20, eine Rufumleitung. Die vom Teilnehmer vorgenommene Einstellung wird vom Endgerät B20 bzw. der mit dem Gerät betriebenen SIM-Karte über die Vermittlungseinrichtung D2 and die zuständige Teilnehmer-Mobilitäts-/Profildatenbank Cb übermittelt und dort gespeichert. Die Teilnehmer-Mobilitäts-/Profildatenbank Cb benachrichtigt die intelligente Anrufsteuerung B über die vom Teilnehmer vorgenommene Einstellung (Modifikation) des Teilnehmerprofils. Die Anrufsteuerung B synchronisiert die vorgenommene Einstellung mit den Mobilitäts-/Profildatenbanken Ca, Cn, die den anderen SIM-Karten, respektive Endgeräten B20, B30, zugeordnet sind.

### Möglichkeiten bei Anwendung des erfindungsgemäßen Verfahrens sowie Hinweise zu seiner Durchführung

a) Der Teilnehmer eines öffentlichen Mobilfunknetzes kann mittels eines Endgerätes und geläufiger Funktionen die typischerweise einem Endgerät (bzw. dem daran angeschlossenen Identifikations-Chip (z.B. GSM-SIM, UMTS-USIM)) zugeordneten Leistungsmerkmale seines öffentlichen Netzes in einer Weise aktivieren, das sich diese Änderung auch synchron auf die im Netz hinterlegten Leistungsmerkmale von anderen ihm zugeordneten Endgeräten (bzw. dem daran angeschlossenen Identifikations-Chip) auswirkt, indem das Profil des Endgerätes von einer intelligenten Rufsteuerung abgefragt wird und für z.B. die Steuerung der Leistungsmerkmale im Rahmen des Rufaufbaues zu einem oder mehreren der verknüpften Endgeräte angewendet wird.
b) Die benötigten Netzressourcen (Vermittlungen, Leitungen) zur Vermittlung eines oder mehrerer paralleler Anrufe auf ein oder mehrere Endgeräte eines Nutzers werden minimiert, indem vor der Rufzustellung, mit einer dazu benötigten Ressourcenbelegung, zunächst eine intelligente Anrufsteuerung die Systemzustände (z.B. besetzt, frei, nicht erreichbar) der zu rufenden Endgeräte, über entsprechende Datenbankabfragen der Mobilitäts-/Profildatenbanken der Endgeräte aber auch der Vermittlungen in denen sich die Endgeräte aufhalten, ermittelt und hieraus eine optimierte Anrufzustellung herleitet, bei der nur Erfolg versprechende Rufversuche einschließlich der zugehörigen Belegung von Netzressourcen initiiert werden.
c) Die benötigten Netzressourcen (Vermittlungen, Leitungen) zur Vermittlung einer Rufumleitung im öffentlichen Mobilfunknetz werden minimiert, indem zunächst vor der Rufzustellung eine intelligente Anrufsteuerung die Systemzustände (z.B. besetzt, frei, nicht erreichbar) des zu rufenden Endgerätes, über entsprechende Datenbankabfragen sowohl der Datenbank, die das zugeordnete Leistungsmerkmalprofil enthält, als auch der Vermittlung in deren zugeordnetem Funkbereich sich das Endgerät aufhält, ermittelt und ggf. unmittelbar eine Rufumleitung, gemäß dem ermittelten Systemzustand des Endgerätes (frei, besetzt, nicht erreichbar) und den Einstellungen des Endgerätes für eine Rufumleitung einleitet, d.h. ohne Aufbau einer Leitung zu dem gerufenen Endgerät. Soweit sich aus dem ermittelten Systemzustand ableiten lässt, dass ein Endgerät frei für den Empfang eines Anruf es ist, erfolgt zunächst eine Rufzustellung, jedoch in der Weise, dass für den Fall, dass es nicht zu einer Annahme der Verbindung kommt (z.B.: funktechnisch nicht erreichbar, Teilnehmer meldet sich nicht, Teilnehmer lehnt Anruf ab), die belegte Leitung wieder bis zum Ursprung der Verbindung freigegeben und ggf. gemäß dem sich aus dem erfolglosen Anrufversuch ermittelten Endgerätezustand sowie den zuvor ermittelten Einstellungen des Endgerätes für die Rufumleitungsfunktionalität eine direkte Verbindung zu einem gewünschten Rufumleitungsziel hergestellt wird.
d) Nutzung und Kombination obiger Verfahren zur Optimierung von Netzressourcen und kundenrelevantem Systemverhalten für die Durchführung von über einen Anruf initiierten parallelen Anrufversuche zu den einem Nutzer zugeordneten Endgeräten. Hierbei wird ggf. die Einleitung einer Rufumleitung in der Ursprungsvermittlung, basierend auf der Auswertung der Systemzustände aller parallel gerufenen Endgeräte, von einer zentralen Steuerung initiiert.

## Patentansprüche

1. Verfahren zur Ansteuerung einer zwei oder mehrere Endgeräte (B10, B20, B30) umfassenden Mehrgerätekonfiguration von Telekommunikationsendgeräten in einem öffentlichen Telekommunikationsnetz,
**dadurch gekennzeichnet, dass** bei einer Aktivierung von Änderungen von einem ersten Endgerät (B10) bzw. einem dem ersten Endgerät angeschlossenen Identifikations-Chip zugeordneten Leistungsmerkmalen des öffentlichen Telekommunikationsnetzes diese Änderungen der Leistungsmerkmale zeitgleich oder mit zeitlicher Verzögerung auch bei den weiteren Endgeräten (B20, B30) bzw. an dem jeweiligen Endgerät angeschlossenen Identifikations-Chip der Mehrgerätekonfiguration aktiviert werden, wobei aus einer Mobilitäts-/Profil-Datenbank (Ca) ein Profil des ersten Endgerätes (B10) bzw. einem dem ersten Endgerät angeschlossenen Identifikations-Chip von einer intelligenten Rufsteuerung (B) abgefragt wird und mindestens teilweise für die Steuerung der Leistungsmerkmale im Rahmen des Rufaufbaus zu mindestens einem weiteren Endgerät (B20, B30) verwendet wird.

## Claims

1. Method for the control of a multi-device configuration of telecommunications terminals comprising two or more terminals (B10, B20, B30) in a public telecommunications network, **characterised in that**, upon activation of changes in performance features of the public telecommunications network associated with a first terminal (B10) or an identification chip connected to the first terminal, these changes in the performance features are also activated simultaneously or with a time delay in the further terminals (B20, B30) or identification chip of the multi-device configuration connected to the respective terminal, wherein from a mobility/profile database (Ca) a profile of the first terminal (B10) or an identification chip connected to the first terminal is retrieved by an intelligent call control system (B) and at least partially used for control of the performance features within the framework of call set-up to at least one further terminal (B20, B30).

## Revendications

1. Procédé pour commander une configuration multi-dispositifs de terminaux de télécommunication comprenant deux terminaux (B10, B20, B30) ou plus dans un réseau de télécommunication public, **caractérisé en ce que** lors d'une activation de modifications de caractéristiques du service de télécommunication public associées à un premier terminal (B10) ou à une puce d'identification reliée au premier terminal, ces modifications des caractéristiques sont aussi activées, en même temps ou avec un délai, sur les autres terminaux (B20, B30) ou sur la puce d'identification reliée au terminal, de la configuration multi-dispositifs, étant précisé qu'un profil du premier terminal (B10) ou d'une puce d'identification reliée au premier terminal est interrogé dans une banque de données de mobilité/profil (Ca) par une commande d'appel intelligente (B) et est utilisé au moins partiellement pour la commande des caractéristiques dans le cadre de l'établissement de la communication avec au moins un autre terminal (B20, B30).
